# EUROPEAN PATENT APPLICATION

(11) **EP 2 187 268 A1**
(43) Date of publication of application: **19.05.2010**
(21) Application number: 08792738.0
(22) Date of filing: 26.08.2008
(51) Int. Cl.: G03G 15/11, G01N 21/47, G03G 15/10

(54) **LIQUID TONNER CONCENTRATION MEASURING DEVICE AND METHOD**

(30) Priority: 27.08.2007 JP 2007220217
(71) Applicant: Mitsubishi Heavy Industries, Ltd., Tokyo 108-8215 (JP)
(72) Inventor: SENOO, Shinichiro, Mihara-shi Hiroshima 729-0393 (JP)
(74) Representative: HOFFMANN EITLE
(86) International application number: PCT/JP2008/065192
(87) International publication number: WO 2009/028499

(57) **Abstract**

In a device and a method for measuring the concentration of liquid toner, for accurate detection of the concentration of liquid toner, provided are a rotary roller 12; a toner adhesion portion 12a along the outer circumference of the roller 12, the toner adhesion portion 12a being configured to hold liquid toner T; a sensor 14 for detecting the concentration of the liquid toner based on the amount of light that is reflected from the liquid toner T adhering at a predetermined thickness to the toner adhesion portion 12a; and a scraping blade 15 for scraping off the liquid toner from the toner adhesion portion 12a after the detection by the sensor 14, and apply voltage of the same polarity as that of the liquid toner to the toner adhesion portion 12a when the liquid toner is scraped off by the scraping blade.

## Description

### [Technical Field]

The present invention relates to a device and a method for measuring the concentration of liquid toner based on the amount of reflected light.

### [Background Art]

Toners used in electrophotographic printers are roughly categorized into dry toners and liquid toners. The reason for that liquid toners (also called liquid developers or wet developers) are used is to provide clear images due to small diameters of the toner particles.
Generally, in such liquid toners, toner particles having a diameter of about 0.01 to 3.0 µm and containing a binder resin, a colorant, and a charge control agent are dispersed in highly insulating (highly resistive) liquid (nonaqueous solvent). Specifically, toner particles made of resin and pigment such as carbon, a charge control agent that determines charging characteristics and the amount of charge of the toner particles, and a fixing agent to fix the toner particles after evaporation of carrier liquid are dispersed in an isoparaffinic solvent, which is an insulating carrier.

Electrophotographic printing (wet developing method) involves electrophoresis of the toner particles in such a liquid toner, which contains the toner particles dispersed in an insulating liquid, for development of an electrostatic latent image on an image carrier. In a direct wet-developing method, the toner particles in the liquid toner are consumed during the development, and the concentration of the toner particles in the liquid toner is decreased. The components of the liquid toner should therefore be replenished as needed while the concentration of the liquid toner must be measured, so as to maintain the concentration of the toner at a certain level.

The technique for detecting the toner concentration in such a liquid toner can use a transmission density detecting method as described in, for example, Patent Literature 1, in which a developer passing through a transparent material is illuminated with light from an emitter such as LED or laser, and the amount of the light that is transmitted to a receiver through the developer is detected, so as to convert the amount of the transmitted light into a toner concentration for measuring the concentration.
Alternatively, for example, Patent Literature 2 discloses a technique that can use a reflection density detecting method, in which light is applied to liquid toner having a predetermined thickness, and the amount of reflected light is detected, so as to convert the amount of the reflected light into a toner concentration for measuring the concentration. In the technique described in Patent Literature 2, a rotary body having an endless groove formed along its outer circumference for holding the liquid toner therein is provided in a liquid toner tank such that the rotary body rotates along a horizontal rotating axis thereof such that a radially lower part of the body is immersed in the liquid toner. A metering blade for making the thickness of the layer of the liquid toner that is pumped up and formed in the groove equal to the depth of the groove is provided upstream the rotary body in the rotating direction. A light sensor including a light-emitting element and a light receiving element is provided right above the top of the rotary body, so that the light sensor detects the density of the transmitted light. Downstream of the rotary body in the rotating direction, a cleaning blade is provided to take off the liquid toner held in the groove.
[Patent Literature 1] Japanese Unexamined Patent Application Publication HEI No. 7-64402
[Patent Literature 2] Japanese Unexamined Patent Application Publication No. 2003-186309

### [Summary of Invention]

### [Technical problems]

Unfortunately, the technique described in Patent Literature 1 for measuring a toner concentration based on the amount of transmitted light often requires a complicated device structure, and precludes stable and accurate measurement of the toner concentration. On this point, the technique described in Patent Literature 2 for measuring a toner concentration based on the amount of reflected light is more preferable in terms of device structure and measurement accuracy.

Even when the toner concentration is measured based on the amount of reflected light, however, a representative sample of the liquid toner in a toner container must be used and measured for accurate density detection. Thus, it is important to sample homogeneous liquid toner in the toner container, to completely remove the sampled liquid toner from the inside of the groove after the detection, and then to sample another liquid toner into the inside of the grooves.

The liquid toner having a low viscosity can be scraped off by the cleaning blade as described in Patent Literature 2. The liquid toner having a high viscosity, however, cannot be completely removed from the inside of the grooves by the cleaning blade. A trace amount of liquid toner remaining in the grooves moderates a change in concentration of fresh liquid toner even if the concentration of the liquid toner in the toner container varies, resulting in low accuracy in the determination of the concentration.

The present invention has been accomplished in view of such problems, and one object of the present invention is to provide a device and a method for measuring the concentration of liquid toner in which liquid toner is completely removed after sampling and detection, so that fresh liquid toner can be sampled in every measurement for accurate detection of the concentration of the liquid toner.

### [MEANS TO SOLVE THE PROBLEM]

To achieve the above objective, a device for measuring the concentration of liquid toner of the present invention includes: a rotary roller; a toner adhesion portion along the outer circumference of the roller, the toner adhesion portion being configured to hold the liquid toner; a sensor for detecting the concentration of the liquid toner based on the amount of light that is reflected from the liquid toner adhering at a predetermined thickness to the toner adhesion portion; a scraping blade for scraping off the liquid toner adhering to the toner adhesion portion after the detection of the liquid toner by the sensor; and applying means for applying voltage of the same polarity as that of the liquid toner to the toner adhesion portion when the liquid toner is scraped off by the scraping blade.

Preferably, the applying means applies voltage of a polarity opposite to that of the liquid toner to the toner adhesion portion after the liquid toner starts to adhere to the toner adhesion portion and before the sensor completes the detection.
Preferably, the toner adhesion portion is an annular shallow groove having a constant depth along the outer circumference of the roller, the roller being horizontally disposed such that the lower part thereof is immersed into the liquid toner that is reserved in a toner container, and being arranged so that the liquid toner in the toner container adheres to the toner adhesion portion; and the device further includes a thickness regulation blade that slidingly contacts with the outer circumference of the roller so as to regulate the liquid toner adhering at a predetermined thickness to the toner adhesion portion.

In an alternative embodiment, preferably the toner adhesion portion is an annular shallow groove having a constant depth along the outer circumference of the roller; and the device further includes toner feed means for feeding the liquid toner in the toner container downwardly to the outer circumference of the roller, and a thickness regulation blade that slidingly contacts with the outer circumference of the roller at a lower position in the space where the liquid toner is fed from the toner feed means so as to cause the liquid toner to be urged and adhere to the toner adhesion portion, and regulates the adhering liquid toner to a predetermined thickness.

Preferably, the applying means applies voltage of a polarity opposite to that of the liquid toner to the toner adhesion portion in a roller phase region where the liquid toner adheres to the toner adhesion portion and where the sensor performs a detection, and applies voltage of the same polarity as that of the liquid toner to the toner adhesion portion in another roller phase region where the liquid toner is scraped off by the scraping blade.

In an alternative embodiment, preferably, the sensor detects the concentration of the liquid toner at predetermined timings relative to the rotary roller, and the applying means applies voltage of a polarity opposite to that of the liquid toner to the toner adhesion portion during a time period after the liquid toner starts to adhere to the toner adhesion portion and before the sensor performs a detection, and applies voltage of the same polarity as that of the liquid toner to the toner adhesion portion during a time period in which the liquid toner is scraped off by the scraping blade.

A method for measuring the concentration of liquid toner of the present invention includes: holding the liquid toner on a toner adhesion portion along the outer circumference of a roller into a predetermined thickness while rotating the roller; detecting the concentration of the liquid toner by a sensor based on the amount of light reflected from the liquid toner adhering to the toner adhesion portion; scraping off the adhering liquid toner by a scraping blade after the detection; and applying voltage of the same polarity as that of the liquid toner to the toner adhesion portion when the liquid toner is scraped off by the scraping blade while rotating the roller.

Preferably, the method applies voltage of a polarity opposite to that of the liquid toner to the toner adhesion portion after the liquid toner starts to adhere to the toner adhesion portion and before the sensor completes the detection, while rotaing the roller.
Preferably, the application of the voltage of a polarity opposite to that of the toner adhesion portion is performed in the roller phase region where the liquid toner adheres to the toner adhesion portion and the sensor performs a detection, and the application of the voltage of the same polarity as that of the toner adhesion portion is performed in the other roller phase region where the liquid toner is scraped off by the scraping blade.

In an alternative embodiment, preferably, the application of the voltage of a polarity opposite to that of the toner adhesion portion is performed during a time period after the liquid toner starts to adhere to the toner adhesion portion and before the sensor performs a detection, and the application of the voltage of the same polarity as that of the toner adhesion portion is performed during a time period in which the liquid toner is scraped off by the scraping blade.

### [Advantageous Effects of Invention]

According to the device and the method for measuring the concentration of the liquid toner of the present invention, liquid toner adheres to a toner adhesion portion along the outer circumference of a rotating roller, with the thickness of the adhering liquid toner being regulated to a predetermined value, and the concentration of the liquid toner is detected by a sensor based on the amount of light reflected from the liquid toner. After the detection, the liquid toner adhering to the toner adhesion portion is scraped off by a scraping blade, which allows another fresh liquid toner to adhere to the toner adhesion portion again, so that the concentration of the latter liquid toner is detected as described above.

When the blade scrapes off the liquid toner, voltage of the same polarity as that of the liquid toner is applied to the toner adhesion portion through the applying means. This produces electric repulsion force, which facilitates removal of the liquid toner from the toner adhesion portion.
This ensures reliable sampling of another fresh liquid toner in every measurement and accurate detection of the concentration of the liquid toner.

The applying means applies voltage of a polarity opposite to that of the liquid toner to the toner adhesion portion after the liquid toner starts to adhere to the toner adhesion portion and before the sensor completes the detection. This generates electrical attractive force, which facilitates adhesion of the liquid toner to the toner adhesion portion and stable holding of the liquid toner on the toner adhesion portion.
The toner adhesion portion along the outer circumference of the roller as an annular shallow groove of a constant depth is immersed in liquid toner in the toner container to hold the liquid toner thereon, and the thickness regulation blade slidingly contacts with the outer circumference of the roller to regulate the liquid toner adhesion to the toner adhesion portion into a predetermined thickness. This allows the liquid toner to adhere to the toner adhesion portion in a predetermined thickness, which results in accurate detection of the concentration of the liquid toner.

The toner feed means feeds the liquid toner in the toner container downwardly to the outer circumference of the roller. The thickness regulation blade causes the fed liquid toner to be urged and adhere to the toner adhesion portion that is formed along the outer circumference of the roller as an annular shallow groove of the constant depth, and regulates the liquid toner to a predetermined thickness. This allows the liquid toner to adhere to the toner adhesion portion in a predetermined thickness, which results in accurate detection of the concentration of the liquid toner.

While the roller completes a full turn, in the roller phase region where the liquid toner adheres to the toner adhesion portion and where the sensor performs detection, voltage of a polarity opposite to that of the liquid toner is applied to the toner adhesion portion, whereas in the roller phase region where the scraping blade scrapes off the liquid toner, voltage of the same polarity as that of the liquid toner is applied to the toner adhesion portion. As a result, another fresh liquid toner is reliably sampled in every measurement while the sensor continuously detects the toner concentration, which results in accurate detection of the concentration of the liquid toner.

During the time period after the liquid toner starts to adhere to the toner adhesion portion and before the sensor performs detection, voltage of a polarity opposite to that of the liquid toner is applied to the toner adhesion portion, whereas during the time period in which the scraping blade scrapes off the liquid toner, voltage of the same polarity as that of the liquid toner is applied to the toner adhesion portion. As a result, although the concentration of the liquid toner is intermittently detected at predetermined timings, the device structure for voltage application is simplified, and new liquid toner is reliably sampled in every measurement, which results in accurate detection of the concentration of the liquid toner.

### [Brief Description of Drawings]

Figs. 1(a) and 1(b) are schematic views illustrating a structure of a device for measuring the concentration of liquid toner according to a first embodiment of the present invention: Fig. 1(a) is a sectional view illustrating the overall structure of the device; and Fig. 1(b) is a perspective view of a roller and blades of the device.
Figs. 2(a) and 2(b) are schematic views illustrating the structure of the main part of the roller of the device for measuring the concentration of the liquid toner according to the first embodiment of the present invention: Fig. 2(a) is a perspective view of the main part; and Fig. 2(b) is a schematic view illustrating the development of the main part.
Fig. 3 is a block diagram illustrating an electrophotographic printer according to each embodiment of the present invention.
Fig. 4 is a sectional view illustrating a structure of the main part of a device for measuring the concentration of liquid toner of a second embodiment of the present invention.
Fig. 5 is a sectional view illustrating a device for measuring the concentration of the liquid toner and a toner container according to the second embodiment of the present invention.
Fig. 6 is a perspective view illustrating the device for measuring the concentration of the liquid toner according to the second embodiment of the present invention.
Fig. 7 is a timing chart explaining a device and a method for measuring the concentration of liquid toner according to a third embodiment of the present invention.
Fig. 8 is a timing chart explaining a device and a method for measuring the concentration of liquid toner according to a first variation of the third embodiment of the present invention.
Figs. 9(a) and 9(b) are explanation views illustrating a device and a method for measuring the concentration of liquid toner according to a second variation of the third embodiment of the present invention: Fig. 9(a) is a timing chart of the device and the method; and Fig. 9(b) is a schematic view illustrating roller areas of the device and the method.

### [Reference Signs List]

- 1: plate cylinder
- 2: intermediate cylinder
- 3: second transfer cylinder
- 4: charging unit
- 5: imaging unit
- 6: development unit
- 6a, 6b: developer roller
- 7: cleaning blade (doctor)
- 8: erase unit
- 9: cleaning blade (doctor)
- 10: printing paper
- 11: toner container
- 12: concentration detection roller
- 12a: annular shallow groove as toner adhesion portion
- 13, 13': thickness regulation blade
- 14: toner concentration sensor
- 15: scraping blade
- 16: liquid toner feed unit
- 16a, 17a: pump
- 16b: toner feed pipe
- 16c: delivery pipe
- 17b: toner return pipe
- 18: toner tray
- 19: stirring unit
- 20: liquid toner-fed space
- 21: conductor
- 22: insulator
- 23: electric lead
- 24a, 24b: electrode (brush)
- T: liquid toner

### [Description of Embodiments]

Embodiments of the present invention are explained below with reference to the drawings.

### [First embodiment]

A first embodiment of the present invention is explained below with reference to the drawings.

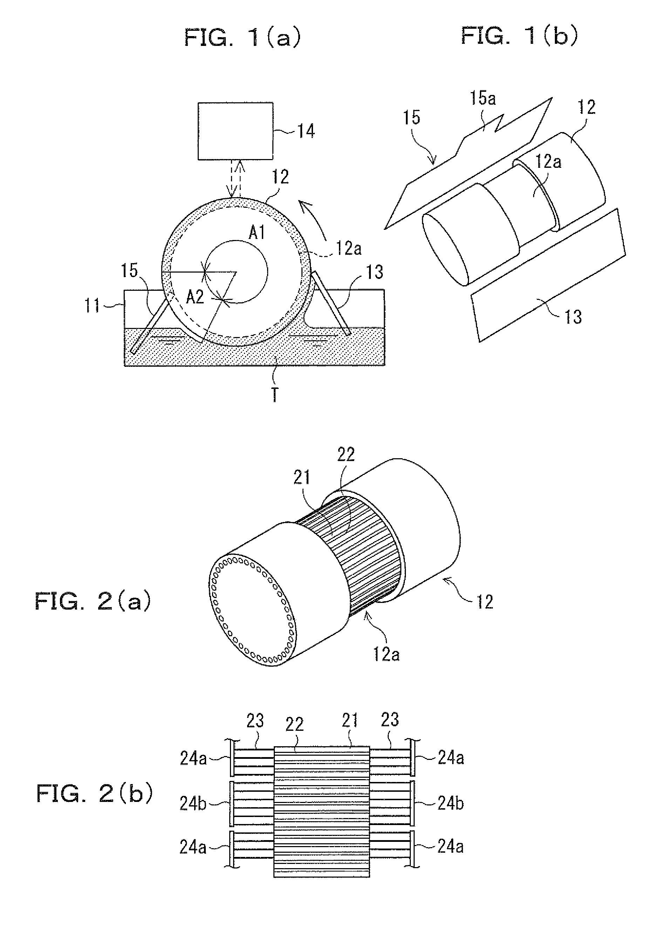

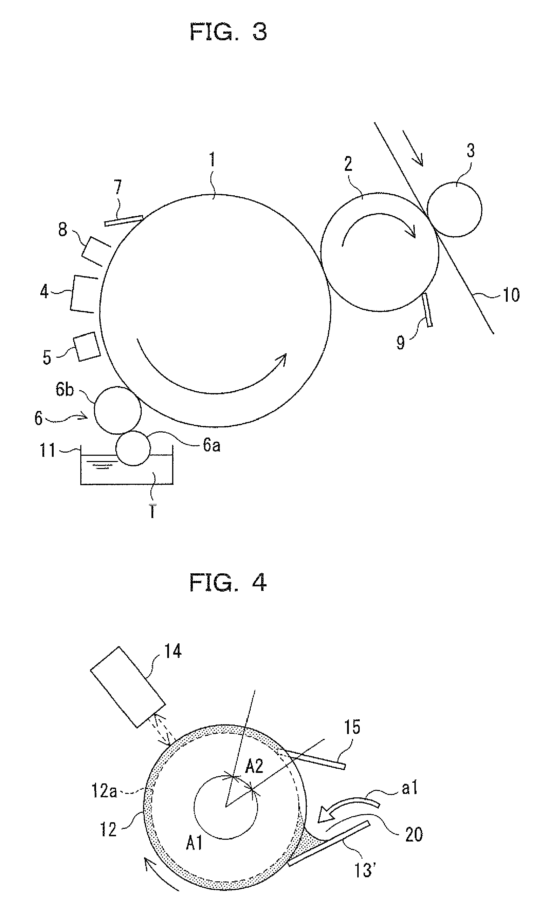

Figs. 1(a), 1(b), 2(a), and 2(b) are schematic views illustrating a device for measuring the concentration of liquid toner according to the first embodiment of the present invention. Fig. 3 is an electrophotographic printer according to each embodiment of the present invention.

### (Electrophotographic Printer)

First, the electrophotographic printer of this embodiment is explained. As shown in Fig. 3, liquid toner T held on a photosensitive drum 1 by a development unit 6 so as to correspond to a picture drawn by an imaging unit 5, and the adhering liquid toner T undergoes printing pressure by a second transfer cylinder 3 and voltaic charge of a polarity opposite to that of the toner, so that the toner is transferred to a printing paper 10 via an intermediate cylinder 2 having an elastic surface that is brought into contact with the photosensitive drum 1.

In accordance with an electrophotographic process, around the photosensitive drum 1 are arranged a cleaning blade 7 for removing residual toner on the photosensitive drum 1, a erase unit 8 for electrical neutralization, a charging unit 4 for generating charge, an imaging unit 5 for drawing a picture, and a development unit 6 for feeding and developing toner in this order.
First, the charging unit 4 charges a photosensitive layer on the surface of the photosensitive drum 1 with, for example, positive static electricity (electric charge). The imaging unit 5 eliminates the electric charge of portions corresponding to images or characters by illumination with light (laser). The development unit 6 causes toner, that is positively-charged for example, to be fixed into portions having no electric charge on the surface of the photosensitive drum 1. In this state, the toner is transferred from the surface of the photosensitive drum 1 onto the surface of the intermediate cylinder 2, and then negative voltage is applied to the second transfer cylinder 3 for example on the backside of the printing paper 10, so that the toner is transferred from the surface of the intermediate cylinder 2.

After the toner is transferred to the surface of the intermediate cylinder 2, the residual toner on the surface of the photosensitive drum 1 is removed by the cleaning blade (doctor) 7 and then completely removed by the erase unit 8. Then, the procedure returns to the charging unit 4 to repeat the above process.
The development unit 6 feeds liquid toner T reserved in a toner container 11 to the surface of the photosensitive drum 1 via developer rollers 6a and 6b. The intermediate cylinder 2 is also provided with a cleaning blade (doctor) 9 to remove the toner remaining on the surface thereof.

In the liquid toner T reserved in the toner container 11, as described above, generally, toner particles each having a diameter of about 0.01 to 3.0 µm and including a binder resin, a colorant, and a charge control agent are dispersed in highly insulating (highly resistive) liquid (that is a nonaqueous solvent and also called carrier liquid). Specifically, toner particles made of resin and pigment such as carbon, a charge control agent that determines charging characteristics and the amount of charge of the toner particles, and a fixing agent to fix the toner particles after evaporation of the carrier liquid are dispersed in an isoparaffinic solvent which is an insulating carrier.

Since the electrophotographic printer according to the embodiment involves electrophoresis of the toner particles in such liquid toner, which contains the particles dispersed in an insulating liquid, for development of an electrostatic latent image on an image carrier, the toner particles in the liquid toner are consumed during the development. Since the consumption of the toner particles reduces the concentration of the toner particles, and lowers the density of printing, the components of the liquid toner are replenished as needed while the concentration of the liquid toner is measured, so as to maintain the concentration of the toner at a certain level. For example, if the concentration of the liquid toner increases, the carrier liquid is replenished, and on the contrary, if the concentration of the liquid toner decreases, toner particles (concentrated toner that is called conc. toner) are replenished.

### (Device for Measuring Concentration of Liquid Toner)

Thus, a device for measuring the concentration of liquid toner according to this embodiment is provided.
As shown in Fig. 1(a), the concentration measuring device according to this embodiment is provided with a concentration detection roller 12 horizontally disposed such that the lower part thereof is immersed into the liquid toner T that is reserved in the toner container 11, and this roller 12 is rotated by a driving unit (not shown).
An annular shallow groove 12a having a constant depth, which functions as a toner adhesion unit, is formed along the outer circumference of the roller 12. The annular shallow groove 12a is provided with a cylindrical bottom surface that is concentric to the cylindrical outer circumference of the roller 12 and has a diameter smaller than that of the outer circumference of the roller 12 by a predetermined constant depth. The liquid toner T adheres to the annular shallow groove 12a at a position where the corresponding lower portion of the roller 12 is immersed into the liquid toner T, by means of the viscosity of the liquid toner T and electrical attraction, which is described below.

A thickness regulation blade 13 for regulating the liquid toner T adhering to the annular shallow groove 12a to a predetermined thickness is provided at a position where the rotary roller 12 emerges from the liquid toner T in the toner container 11. As shown in Fig. 1(b), the thickness regulation blade 13 has a linear edge to smooth the surface of the liquid toner T adhering to the annular shallow groove 12a while slidingly contacting with the cylindrical outer surface of the roller 12, so that the surface of the liquid toner T is flush with the cylindrical outer surface of the roller 12. Consequently, the liquid toner T adhering to the annular shallow groove 12a has a predetermined constant thickness corresponding to the depth of the annular shallow groove 12a.

A toner concentration sensor 14 for detecting the concentration of the liquid toner based on the amount of light reflected from the liquid toner T adhering to the annular shallow groove 12a in a predetermined thickness is provided above the liquid level of the liquid toner T in the toner container 11 and downstream of the thickness regulation blade 13 in the rotating direction of the roller 12 (in this embodiment, right above the roller 12). The toner concentration sensor 14 is provided with a light-emitting element (not shown) emitting light with a predetermined intensity to a thin layer of the liquid toner T having a predetermined thickness and a light-sensitive element (not shown) receiving light reflected from the thin layer of the liquid toner, so as to detect the concentration of the toner based on the intensity of the reflected light relative to that of the emitted light. The information detected by the toner concentration sensor 14 is sent to toner control means (not shown), which controls replenishment of the components of the liquid toner on the basis of the detected information.

A scraping blade 15 for scraping off the liquid toner T adhering to the annular shallow groove 12a is provided downstream of the toner concentration sensor 14 in the rotating direction of the roller 12 and right above the liquid surface of the liquid toner T in the toner container 11. As shown in Fig. 1(b), the scraping blade 15 is provided with a projecting linear edge 15a to fit in the annular shallow groove 12a. The edge 15a enters the annular shallow groove 12a and scrapes off the liquid toner T adhering to the annular shallow groove 12a while slidingly contacting with the bottom and the sides of the annular shallow groove 12a. The liquid toner T adhering to the annular shallow groove 12a is removed by the force from the scraping blade 15 and later-described electrical repulsion force.

The applying means for applying voltage of a predetermined polarity to the annular shallow groove 12a is described below. As shown in Figs. 2(a) and 2(b), at the bottom of the annular shallow groove 12a, a plurality of conductors 21 which extends in the axial direction, being narrow in the circumference direction, is arranged in the circumference direction between insulators 22 which extend in the axial direction, being extremely narrow in the circumference direction. Each conductor 21 is connectable to external electrodes (brushes) 24a and 24b (on both sides of the roller 12) through electric leads 23.

The roller 12 itself is composed of a nonconductive (insulating) material. This means the insulator 22 can be composed of the roller 12 itself. In this case, multiple grooves extending in the axis direction are formed in the bottom of the annular shallow groove 12a, in which conductors 21 are disposed separately from one another.
The surface of the roller 12 exposed between the grooves and the surface of each conductor 21 are arranged to be coplanar with each other at a predetermined depth.

In this embodiment, although multiple conductors 21 are exposed such that they form the bottom surface of the annular shallow groove 12a, they can be embedded under the bottom surface of the annular shallow groove 12a such that they are not exposed. In this case, the bottom surface of the annular shallow groove 12a is easily formed into a uniform predetermined depth.
One (brush 24a) of the two brushes 24a and 24b on the sides of the roller 12 is disposed in a roller rotation phase region A1 in Fig. 1(a), and applies voltage of a polarity opposite to that of the liquid toner to the conductors 21 in this area through a power supply unit (not shown). The other brush (brush 24b) is disposed in another roller rotation phase region A2 in Fig. 1(a), and applies voltage of the same polarity as that of the liquid toner to the conductors 21 in this area through the power supply unit (not shown).

The roller rotation phase region A1 is a roller phase region where the liquid toner T adheres to the annular shallow groove 12a (the lower portion of the roller 12) and where the sensor 14 performs detection (the upper portion of the roller 12), whereas the other roller rotation phase region A2 is a roller phase region where the scraping blade 15 scrapes off the liquid toner T.

### (Operations and Advantages)

The device for measuring the concentration of the liquid toner according to the first embodiment of the present invention is configured as described above, which can measure the concentration of liquid toner as follows.
As shown in Fig. 1(a), during the rotation of the roller 12 which is disposed such that the lower portion of the roller is immersed into the liquid toner T in the toner container 11, the liquid toner T adheres to the annular shallow groove (toner adhesion portion) 12a due to its viscosity at the lower portion of the roller 12 that is immersed into the liquid toner T. In this device, since each conductor 21 disposed at the bottom of the annular shallow groove 12a in the rotation phase region A1 of the roller 12 is energized by voltage of a polarity opposite to that of the liquid toner T to be charged with a polarity opposite to that of the liquid toner T, the electrical attractive force also causes the liquid toner T to adhere to the annular shallow groove 12a. As a result, the liquid toner T having a required thickness can surely adhere to the annular shallow groove 12a.

Then, the edge of the thickness regulation blade 13 smoothes the surface of the liquid toner T adhering to the annular shallow groove 12a while slidingly contacting with the cylindrical outer surface of the roller 12, so that the surface of the liquid toner T is flush with the cylindrical outer surface of the roller 12.
The concentration of the liquid toner T that is smoothed into a predetermined height or thickness in the annular shallow groove 12a is detected downstream of the rotating direction of the roller 12 (above the roller 12 herein) by the toner concentration sensor 14. In other words, the toner concentration sensor 14 illuminates the thin layer of the liquid toner T that adheres to a predetermined thickness with light having a predetermined intensity from the light-emitting element, receives light reflected from the thin layer of the liquid toner by the light-sensitive element, and detects the toner concentration based on the intensity of the reflected light relative to the illuminated light.

At this point, in the rotation phase region A1 of the roller 12, that is, the roller phase region where the liquid toner T adheres to the annular shallow groove 12a (near the lower portion of the roller 12) and where the sensor 14 performs detection, the liquid toner T is surely held in the annular shallow groove 12a by electrostatic attractive force. Consequently, since the liquid toner T in the annular shallow groove 12a is held at a predetermined thickness without change in the thickness, the sensor 14 can accurately detect the concentration of the liquid toner T. Then, the information detected by the toner concentration sensor 14 is sent to toner control means (not shown), which controls replenishment of the components of the liquid toner on the basis of the detected information.

When the rotation phase of the roller 12 advances and reaches the rotation phase region A2 of the roller 12, that is, the phase region where the liquid toner T is scraped off by the scraping blade 15, each conductor 21 disposed in the bottom of the annular shallow groove 12a is energized with voltage of a polarity opposite to that of the liquid toner T to be charged with the same polarity as that of the liquid toner T, thereby electric repulsion force is imparted to the liquid toner T in the annular shallow groove 12a so that the toner is expelled out of the annular shallow groove 12a. In addition to the force, the edge 15a of the scraping blade 15 scrapes off the liquid toner T adhering to the annular shallow groove 12a while slidingly contacting with the bottom surface and the sides of the annular shallow groove 12a, which results in complete removal of the liquid toner T in the annular shallow groove 12a.

Consequently, when the rotation phase of the roller 12 advances to the rotation phase region A1 again, fresh liquid toner T adheres to the annular shallow groove 12a from which the remaining liquid toner T has been completely removed. As a result, the liquid toner T in the annular shallow groove 12a to advance to the sensor 14 is always fresh, and the fresh liquid toner T can be sampled in every measurement for sure detection of the latest accurate concentration information.

In addition, since this embodiment can continuously detect the toner concentration, replenishment of the components of the liquid toner can be accurately controlled in response to any slight change in the concentration, while constantly monitoring the toner concentration.

### [Second Embodiment]

Next, a second embodiment of the present invention is explained below with reference to the drawings.
Figs. 4 through 6 are schematic views illustrating a device for measuring the concentration of liquid toner of the second embodiment of the present invention.
An electrophotographic printer according to this embodiment is the same as that of the first embodiment (see Fig. 3), and is not explained below.
As shown in Fig. 4, in this embodiment, the relative arrangements of a thickness regulation blade 13', a toner concentration sensor 14, and a scraping blade 15 with respect to a concentration detection roller 12 are different from those of the first embodiment.

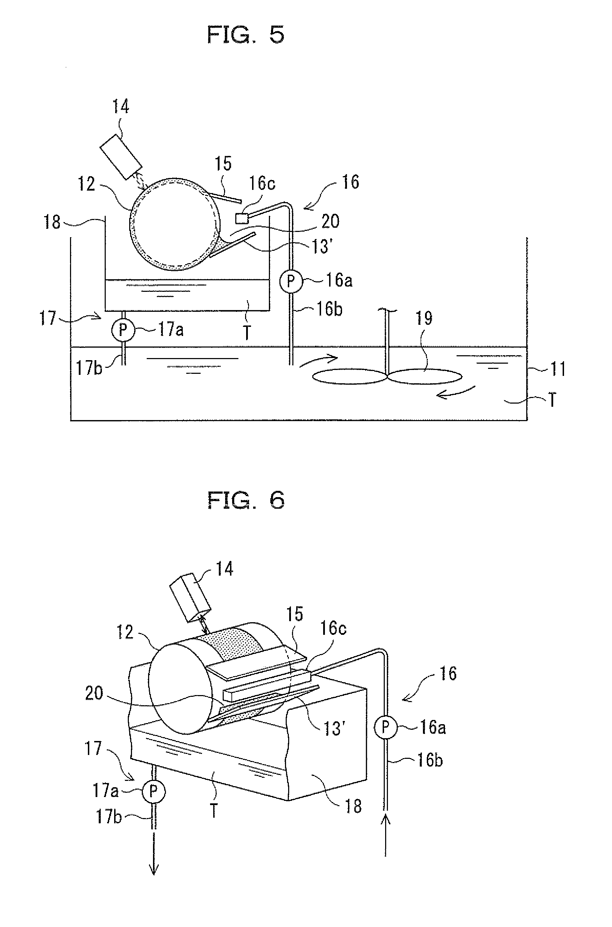

In other words, the thickness regulation blade 13' is downwardly disposed at a position where the roller 12 moves downwardly, so that the thickness regulation blade 13' and the outer circumference surface of the roller 12 surround the lower part of a liquid toner-fed space 20, and a liquid toner feed unit 16 feeds the liquid toner T downwardly to the space (see arrow a1).
As shown in Figs. 5 and 6, the concentration detection roller 12 is separately disposed from the liquid toner T in a toner container 11, and a toner tray 18 is provided under the concentration detection roller 12. The circumference surface of the roller 12, the thickness regulation blade 13', and sidewalls (not shown) arranged on both ends of the thickness regulation blade 13' define the upwardly open liquid toner-fed space 20.

The liquid toner feed unit 16 includes a toner feed pipe 16b having a first end (toner aspiration orifice) disposed in the liquid toner T in the toner container 11 and a second end (toner discharge orifice) disposed above the liquid toner-fed space 20, a pump 16a that is interposed in the middle of the toner feed pipe 16b, and a delivery pipe 16c that is disposed in the axis direction of the roller 12 above the liquid toner-fed space 20 and connected to the second end of the toner feed pipe 16b. Driving of the pump 16a causes the liquid toner T in the toner container 11 to be fed to the delivery pipe 16c through the toner feed pipe 16b, and to be evenly distributed to each area of the liquid toner-fed space 20 extending from the delivery pipe 16c in the axis direction of the roller 12.

Excess liquid toner T in the liquid toner-fed space 20 and the liquid toner T scraped off by the scraping blade 15 fall into the toner tray 18. The liquid toner T in the toner tray 18 immediately returns to the toner container 11 by a toner return unit 17 including a toner return pipe 17b that extends from the bottom of the toner tray 18 to the toner container 11 and a pump 17a that is interposed in the middle of a toner return pipe 17b.

The liquid toner T is stirred in the toner container 11 by a stirring unit 19 so as to consistently have a uniform concentration, and is fed to the concentration detection roller 12 with the concentration. This allows the toner concentration sensor 14 to accurately detect the concentration of the liquid toner T in the toner container 11.
In this embodiment, as described above, when the liquid toner T is fed downwardly to the liquid toner-fed space 20, the lower part of which is surrounded by the thickness regulation blade 13' and the outer circumference surface of the roller 12, since the roller 12 rotates to push the liquid toner T downward, a combined force of the pushing force, the force by the thickness regulation blade 13' to urge the liquid toner T to the outer circumference surface of the roller 12, and the own weight of the liquid toner T causes the liquid toner T to adhere to the annular shallow groove 12a. As a result, compared to the first embodiment in which the liquid toner T adheres to the annular shallow groove 12a by electrical attractive force and the viscosity of the liquid toner T to the roller 12, this embodiment can more reliably causes the liquid toner T to adhere to and to be held in the annular shallow groove 12a.

In accordance with the arrangement of such a thickness regulation blade 12', the scraping blade 15 is disposed right above the thickness regulation blade 13' in the vertical direction, and the toner concentration sensor 14 is slightly inclined from the vertical direction above the roller 12 so as to have a distance from the scraping blade 15, but the arrangements of these elements are not limited to the above.
Moreover, to meet the arrangements of the thickness regulation blade 13', the toner concentration sensor 14, and the scraping blade 15, the roller rotation phase regions A1 and A2 also differ from those of the first embodiment, but are not explained below because the other structures are the same as those of the first embodiment.

The device for measuring the concentration of liquid toner according to the second embodiment of the present invention, which is configured as described above, provides an advantage that the liquid toner T more reliably adheres to and held in the annular shallow groove 12a, in addition to the same advantages as those of the first embodiment.

### [Third Embodiment]

A third embodiment of the present invention is explained below with reference to the drawings.

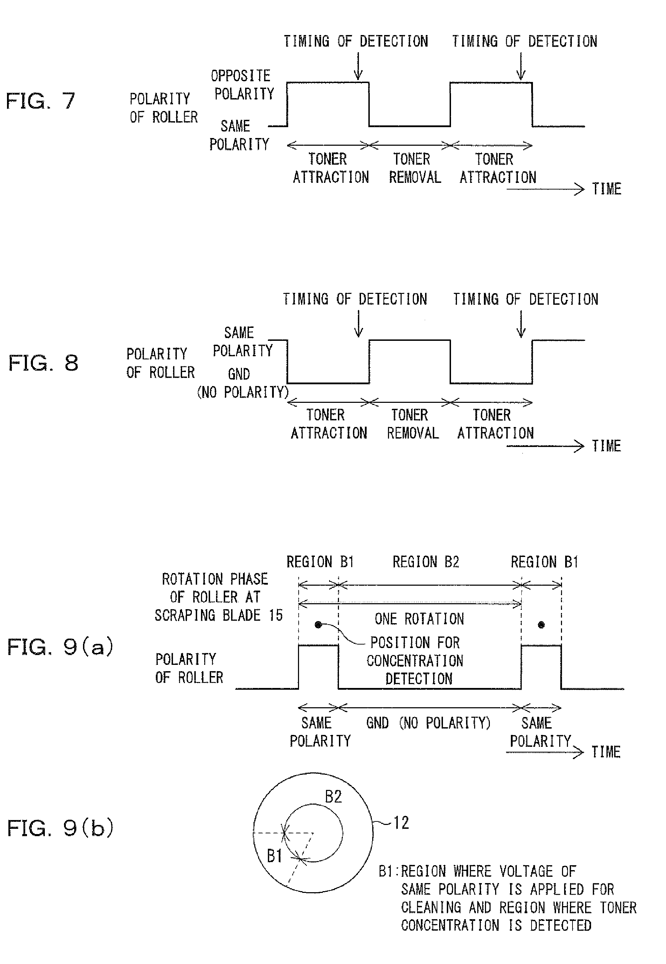

Fig. 7 is a timing chart explaining a device and a method for measuring the concentration of liquid toner according to the third embodiment of the present invention.
An electrophotographic printer according to this embodiment is the same as that of the first embodiment (see Fig. 3), and is not explained below. The device for measuring the concentration of the liquid toner of the first embodiment shown in Figs. 1(a) and 1(b) or of the second embodiment shown in Fig. 4 is used in this embodiment, but the application of voltage is switched according to time instead of the rotation phase region of the roller 12. That is to say, in contrast to the first embodiment, multiple conductors separated in the circumference direction (rotating direction) of the roller 12 to which a polarity is applied are not required. The overall annular shallow groove 12a or the overall roller 12 is provided with a single conductor so that the overall annular shallow groove 12a or the overall roller 12 can be uniformly charged, and voltage is selectively applied to the conductor, the voltage having a polarity opposite to or same as that of the liquid toner T.

Specifically, as shown in Fig. 7, the concentration of the liquid toner is intermittently detected in a predetermined period. The time period from a predetermined time before the concentration of the liquid toner is detected to a time when the detection is completed is defined as a toner attraction period. In the toner attraction period, voltage of a polarity opposite to that of the liquid toner T is applied to the overall annular shallow groove 12a or the overall roller 12. This generates electrical attractive force that causes the liquid toner T to adhere to the annular shallow groove 12a.

The predetermined time period after the detection of the concentration of the liquid toner is defined as a toner removal period, in which voltage of the same polarity as that of the liquid toner T is applied to the overall annular shallow groove 12a or the overall roller 12. This generates electric repulsion force that causes the liquid toner T to be removed from the annular shallow groove 12a.
The toner attraction period should be at least a time required for the roller 12 to rotate from the position where the liquid toner T adheres to the annular shallow groove 12a to the position where the sensor 41 performs the detection.

Preferably, the toner removal period is a time required for a full turn of the roller 12 or longer.
As described above, although this embodiment cannot continuously detect the concentration of the liquid toner but intermittently detect the concentration at predetermined timings, the device structure for voltage application is simplified, and fresh liquid toner is reliably sampled in every measurement, which results in accurate detection of the concentration of the liquid toner.

As variations of this embodiment, structures shown in Figs. 8 and 9 can also be adopted.
In the third embodiment shown in Fig. 7, the overall annular shallow groove 12a or the overall roller 12 is provided with a single conductor, and voltage of a polarity opposite to that of the liquid toner T is applied to the conductor to enhance adhesion and holding of the liquid toner T to the annular shallow groove 12a, and voltage of the same polarity as that of the liquid toner T is applied to the conductor to generate electric repulsion force for removal. To the contrary, the variation shown in Fig. 8 applies only voltage of the same polarity as that of the liquid toner T.

During the toner attraction period from a predetermined time before the concentration of the liquid toner is detected to a time when the detection is performed, the conductor (the overall annular shallow groove 12a or the overall roller 12) has no polarity (GND (earth ground) state), whereas during the predetermined toner removal period after the detection of the concentration of the liquid toner, voltage of the same polarity as that of the liquid toner T is applied to the overall annular shallow groove 12a or the overall roller 12.

This can also, as in the third embodiment, remove the liquid toner T from the annular shallow groove 12a by electric repulsion force, without preventing the adhesion and holding of the liquid toner T to the annular shallow groove 12a.
In addition, the variation shown in Fig. 9, as in the variation shown in Fig. 8, applies only voltage of the same polarity as that of the liquid toner T, but one cycle of the application of the voltage corresponds to one full turn of the roller 12. That is to say, as shown in Fig. 9(b), the position for the detection of the toner concentration is set at a certain phase angle in a specific area (roller rotation phase region B1) of the roller 12. As shown in Fig. 9(a), after the detection of the toner concentration, voltage of the same polarity as that of the liquid toner T is applied to the overall annular shallow groove 12a or the overall roller 12 only when the roller rotation phase region B1 passes through the scraping blade 15, and after the roller rotation phase region B1 passes through the scraping blade 15 and when the roller rotation phase region B2 passes the scraping blade 15, the application of voltage of the same polarity as that of the liquid toner T is stopped so that the overall annular shallow groove 12a or the overall roller 12 has no polarity (GND (earth ground) state)

The above structure also, as in the third embodiment, enables the removal of the liquid toner T from the annular shallow groove 12a by electric repulsion force, without preventing the adhesion and holding of the liquid toner T to the annular shallow groove 12a at least within the area (roller rotation phase region B1) for detecting the toner concentration.

### [Others]

Although the embodiments of the present invention have been explained, the present invention is not limited to the above embodiments, and may be modified and changed without departing from scope of the present invention.
For example, in the above each embodiment, although electrical attractive force that is generated by applying voltage of a polarity opposite to that of the liquid toner T to the annular shallow groove 12a is utilized at the roller rotation phase region A1, in the case where the liquid toner T has an enough viscosity or easily adheres to the annular shallow groove 12a due to the device structure as in the second embodiment, a sensor that is mounted for detecting the color density on a line of a printer as a color quality detection unit may not utilize the electrical attractive force. In this case, voltage of the same polarity as that of the liquid toner T to the annular shallow groove 12a may be applied at the roller rotation phase region A1 or only at predetermined timings to facilitate the removal of the liquid toner T.

## Claims

1. A device for measuring the concentration of liquid toner, comprising:
a rotary roller;
a toner adhesion portion along the outer circumference of the roller, the toner adhesion portion being configured to hold the liquid toner;
a sensor for detecting the concentration of the liquid toner based on the amount of light that is reflected from the liquid toner adhering at a predetermined thickness to the toner adhesion portion;
a scraping blade for scraping off the liquid toner adhering to the toner adhesion portion after the detection of the liquid toner by the sensor; and
applying means for applying voltage of the same polarity as that of the liquid toner to the toner adhesion portion when the liquid toner is scraped off by the scraping blade.

2. The device for measuring the concentration of liquid toner of claim 1, wherein the applying means applies voltage of a polarity opposite to that of the liquid toner to the toner adhesion portion after the liquid toner starts to adhere to the toner adhesion portion and before the sensor completes the detection.

3. The device for measuring the concentration of liquid toner of claim 1 or 2, wherein
the toner adhesion portion is an annular shallow groove having a constant depth along the outer circumference of the roller, the roller being horizontally disposed such that the lower part thereof is immersed into the liquid toner that is reserved in a toner container, and being arranged so that the liquid toner in the toner container adheres to the toner adhesion portion; and
the device further comprises a thickness regulation blade that slidingly contacts with the outer circumference of the roller so as to regulate the liquid toner adhering at a predetermined thickness to the toner adhesion portion.

4. The device for measuring the concentration of liquid toner of claim 1 or 2, wherein
the toner adhesion portion is an annular shallow groove having a constant depth along the outer circumference of the roller; and
the device further comprises:
toner feed means for feeding the liquid toner in the toner container downwardly to the outer circumference of the roller, and
a thickness regulation blade that slidingly contacts with the outer circumference of the roller at a lower position in the space where the liquid toner is fed from the toner feed means so as to cause the liquid toner to be urged and adhere to the toner adhesion portion, and regulates the adhering liquid toner to a predetermined thickness.

5. The device for measuring the concentration of liquid toner of claim 2, wherein
the applying means applies voltage of a polarity opposite to that of the liquid toner to the toner adhesion portion in a roller phase region where the liquid toner adheres to the toner adhesion portion and where the sensor performs a detection, and applies voltage of the same polarity as that of the liquid toner to the toner adhesion portion in another roller phase region where the liquid toner is scraped off by the scraping blade.

6. The device for measuring the concentration of liquid toner of claim 2, wherein
the sensor detects the concentration of the liquid toner at predetermined timings relative to the rotary roller, and
the applying means applies voltage of a polarity opposite to that of the liquid toner to the toner adhesion portion during a time period after the liquid toner starts to adhere to the toner adhesion portion and before the sensor performs a detection, and applies voltage of the same polarity as that of the liquid toner to the toner adhesion portion during a time period in which the liquid toner is scraped off by the scraping blade.

7. A method for measuring the concentration of liquid toner, comprising:
holding the liquid toner on a toner adhesion portion along the outer circumference of a roller into a predetermined thickness while rotating the roller;
detecting the concentration of the liquid toner by a sensor based on the amount of light reflected from the liquid toner adhering to the toner adhesion portion;
scraping off the adhering liquid toner by a scraping blade after the detection; and
applying voltage of the same polarity as that of the liquid toner to the toner adhesion portion when the liquid toner is scraped off by the scraping blade while rotating the roller.

8. The method for measuring the concentration of liquid toner of claim 7, further comprising:
applying voltage of a polarity opposite to that of the liquid toner to the toner adhesion portion after the liquid toner starts to adhere to the toner adhesion portion and before the sensor completes the detection, while rotating the roller.

9. The method for measuring the concentration of liquid toner of claim 8, wherein
the application of the voltage of a polarity opposite to that of the toner adhesion portion is performed in the roller phase region where the liquid toner adheres to the toner adhesion portion and the sensor performs a detection, and the application of the voltage of the same polarity as that of the toner adhesion portion is performed in the other roller phase region where the liquid toner is scraped off by the scraping blade.

10. The method for measuring the concentration of liquid toner of claim 8, wherein
the application of the voltage of a polarity opposite to that of the toner adhesion portion is performed during a time period after the liquid toner starts to adhere to the toner adhesion portion and before the sensor performs a detection, and the application of the voltage of the same polarity as that of the toner adhesion portion is performed during a time period in which the liquid toner is scraped off by the scraping blade.
